# EUROPEAN PATENT APPLICATION

(11) **EP 4 790 463 A1**
(43) Date of publication of application: **12.08.2026**
(21) Application number: 24881046.7
(22) Date of filing: 13.06.2024
(51) Int. Cl.: G02B 6/04

(54) **FIBER-OPTIC ASSEMBLY MANUFACTURING METHOD, FIBER-OPTIC ASSEMBLY AND OPTICAL COMMUNICATION DEVICE**

(30) Priority: 23.10.2023 CN 202311379211
(71) Applicant: HUAWEI TECHNOLOGIES CO., LTD., Shenzhen 518129 (CN)
(72) Inventor: GUO, Dan, Shenzhen, Guangdong 518129 (CN); ZHAO, Junying, Shenzhen, Guangdong 518129 (CN)
(74) Representative: Maiwald GmbH
(86) International application number: PCT/CN2024/098925
(87) International publication number: WO 2025/086668

(57) **Abstract**

A manufacturing method of an optical fiber assembly, an optical fiber assembly, and an optical communication device are disclosed. The manufacturing method of an optical fiber assembly includes: obtaining a plurality of first support pillars (1) used for supporting optical fibers, where a central hole (11) that penetrates through two ends of each first support pillar (1) is provided at a center of the first support pillar (1), and inserting one optical fiber into each central hole (11); combining the plurality of first support pillars (1) based on a preset arrangement pattern; holding together a combination of the plurality of arranged first support pillars (1) by using a holding apparatus (5); and adding a bonding agent to gaps between a plurality of target support pillars (1), so that the plurality of target support pillars (1) are bonded to each other. The method can reduce difficulty in manufacturing the optical fiber assembly, and improve positional accuracy of optical fibers.

## Description

This application claims priority to Chinese Patent Application No. 202311379211.6, filed with the China National Intellectual Property Administration on October 23, 2023 and entitled "MANUFACTURING METHOD OF OPTICAL FIBER ASSEMBLY, OPTICAL FIBER ASSEMBLY, AND OPTICAL COMMUNICATION DEVICE", which is incorporated herein by reference in its entirety.

### TECHNICAL FIELD

This application relates to the field of optical fiber communication technologies, and in particular, to a manufacturing method of an optical fiber assembly, an optical fiber assembly, and an optical communication device.

### BACKGROUND

An optical fiber array, initially starting from a one-dimensional optical fiber array, has gradually evolved toward a two-dimensional optical fiber array. Due to a large quantity of ports, a high density, and high accuracy, the two-dimensional optical fiber array can implement parallel transmission, connection, and switching of multiple optical signals, and is increasingly applied in the communication field.

The two-dimensional optical fiber array (hereinafter referred to as the optical fiber assembly) is an important optical component, and is typically applied to an MEMS OXC, an optical switch, a surface emitter, a surface detector, an image-transmitting optical fiber bundle, a light-transmitting optical fiber bundle, or the like. In the conventional technology, a two-dimensional optical fiber collimator array is fabricated by coupling an optical fiber assembly to a lens array. Because coupling poses a very high requirement on positional accuracy of optical fibers in the optical fiber assembly, it is difficult to manufacture the optical fiber assembly, and difficult to meet an accuracy requirement on the positional accuracy of the optical fibers.

### SUMMARY

This application provides a manufacturing method of an optical fiber assembly, an optical fiber assembly, and an optical communication device, to reduce difficulty in manufacturing the optical fiber assembly and improve positional accuracy of optical fibers.

According to a first aspect, this application provides a manufacturing method of an optical fiber assembly. The method includes:
obtaining a plurality of first support pillars used for supporting optical fibers, where a central hole that penetrates through two ends of each first support pillar is provided at a center of the first support pillar, and inserting one optical fiber into each central hole;
combining the plurality of first support pillars based on a preset arrangement pattern;
holding together a combination of the plurality of arranged first support pillars by using a holding apparatus; and
adding a bonding agent to gaps between a plurality of target support pillars, so that the plurality of target support pillars are bonded to each other.

Specifically, in a preferred case, the bonding agent may be added to gaps between all the target support pillars. In some cases, the bonding agent may alternatively be added to gaps between some target support pillars based on a requirement.

In an implementation of this application, optical fibers are inserted into the first support pillars, and the first support pillars having the optical fibers disposed inside are combined to form an optical fiber matrix (optical fiber assembly). In this manner, the first support pillars having the optical fibers disposed inside are combined as an independent individual unit. This can not only reduce difficulty in processing the optical fiber assembly, but also facilitate adjustment of positions of the first support pillars, so that the optical fibers can be aligned with coupling objects, thereby improving positional accuracy of the optical fibers.

In addition, in this application, support pillars in which the optical fibers are mounted may be individually polished and coated before being combined. Therefore, an unqualified optical fiber may be locally reworked, and integrity and quality of an entire connector are not affected by poor processing such as polishing or coating of an optical fiber. In addition, in this application, a quantity and density of the first support pillars are adjusted, so that connectors with different quantities of optical fibers and different optical fiber densities can be assembled, and scalability is high. This can avoid use of different molds for processing different optical fiber assemblies and greatly reduce production costs. In addition, in this application, a single first support pillar may be considered as a ferrule. The single support pillar is first coupled to a single lens, and then a plurality of first support pillars coupled to lenses are combined, to form a coupling element between the optical fiber assembly and a lens array, thereby greatly reducing coupling difficulty. In addition, in this application, in a process of assembling the optical fiber assembly, the optical fibers in the optical fiber assembly may be connected to optical fibers in another optical fiber assembly for a loss test. When a loss is relatively high, the positions of the first support pillars may be adjusted in time to improve positional accuracy of adjusting the optical fibers, thereby reducing the loss in time.

In some implementations of this application, the target support pillars are determined based on spot detection of the support pillars; and
the spot detection of the support pillars includes:
transmitting light through each optical fiber in each first support pillar, and projecting light output from each optical fiber onto a spot detection apparatus, to form a first spot projection, where for example, light may be transmitted through each optical fiber in a time sequence, or light may be transmitted through each optical fiber simultaneously;
detecting positional accuracy of each first spot projection by using the spot detection apparatus, and determining whether a position of each first spot projection coincides with a standard position;
when the position of the first spot projection does not coincide with the standard position, adjusting a position of the first support pillar corresponding to the first spot projection, so that the position of the first spot projection coincides with the standard position, where for example, an operator may use tweezers to nudge the first support pillar to adjust the position of the first support pillar, or may use another tool to adjust the position of the first support pillar; and
determining that first support pillars corresponding to coincident first spot projections are the target support pillars.

Due to tolerances in sizes of diameters of the first support pillars and sizes of positions of central holes, after the plurality of first support pillars are combined, tolerance accumulation is greater. In this application, the spot detection apparatus is used to detect positions of the optical fibers, and the positions of the first support pillars are adjusted based on a detection result, so that adverse impact caused by cumulative tolerances can be reduced, and positional accuracy of the optical fibers can be improved.

In some implementations of this application, an adjustment assembly is disposed on the holding apparatus, and the adjustment assembly is configured to adjust a relative position between at least one of the plurality of first support pillars and another first support pillar; and
adjusting the position of the first support pillar corresponding to the first spot projection includes:
adjusting, by using the adjustment assembly, the position of the first support pillar corresponding to the non-coincident first spot projection.

In some implementations of this application, combining the plurality of first support pillars based on the preset arrangement pattern includes: causing the first support pillars to extend in a same direction, and aligning end faces of the first support pillars at least on a first side, where
the preset arrangement pattern includes a honeycomb shape and a chessboard shape; and when the preset arrangement pattern is the honeycomb shape, lines connecting centers of any four adjacent first support pillars form a parallelogram; or when the preset arrangement pattern is the chessboard shape, lines connecting centers of any four adjacent first support pillars form a rectangle.

A spacing between two adjacent first support pillars is not limited in this application. The two adjacent first support pillars may be in contact with each other, or may be separated by a specific distance. During production, a spacing between first support pillars may be set based on an actual requirement.

In some implementations of this application, when the preset arrangement pattern is the honeycomb shape, a quantity of the first support pillars is seven, where one of the first support pillars is located at a center of the preset arrangement pattern, and remaining six first support pillars are sequentially arranged around the first support pillar located at the center; or when the preset arrangement pattern is the chessboard shape, a quantity of the first support pillars is four or nine, and a quantity of rows of the first support pillars is equal to a quantity of columns of the first support pillars.

In some implementations of this application, the manufacturing method provided in this application further includes:
removing the holding apparatus from the plurality of first support pillars in which the target support pillars have been bonded, to obtain a stacked unit including the plurality of first support pillars.

In some implementations of this application, the manufacturing method provided in this application further includes:
obtaining a plurality of stacked units;
shaping and securing the plurality of stacked units by using a securing frame; and
adding a bonding agent to gaps between a plurality of target stacked units, so that the plurality of target stacked units are bonded to each other.

According to the foregoing technical solution, during manufacturing of an optical fiber assembly with a relatively large quantity of optical fibers, a plurality of stacked units may be combined, so that operation steps can be simplified, and positional accuracy of the optical fibers can be ensured.

In some implementations of this application, the securing frame includes a recessed frame and a pressing strip, and shaping and securing the plurality of stacked units by using the securing frame includes:
arranging the stacked units based on an arrangement pattern of first support pillars in the stacked units, and inserting the stacked units into the recessed frame; for example, when the arrangement pattern of the first support pillars in the stacked units is a honeycomb shape, arranging the stacked units in the honeycomb shape; or when the arrangement pattern of the first support pillars in the stacked units is a chessboard shape, arranging the stacked units in the chessboard shape;
determining that no gap sufficient for inserting a second support pillar exists between the stacked units inserted into the recessed frame, where the second support pillar has a same structure and size as the first support pillar; and
disposing the pressing strip at an opening of the recessed frame, to secure the stacked units and maintain relative displacements between the stacked units.

Specifically, a manner of determining that no gap sufficient for inserting the second support pillar exists between the stacked units inserted into the recessed frame needs to be determined based on a preset arrangement pattern of the stacked units.

When the preset arrangement pattern is the honeycomb shape, determining that no gap sufficient for inserting the second support pillar exists between the stacked units inserted into the recessed frame includes:
determining that a gap sufficient for inserting the second support pillar exists between the stacked units; and
inserting a second support pillar having an optical fiber disposed inside into the gap between the stacked units, to fill the gap.

When the preset arrangement pattern is the chessboard shape, determining that no gap sufficient for inserting the second support pillar exists between the stacked units inserted into the recessed frame includes:
determining a shape of a rectangle formed by combining the stacked units.

In some implementations of this application, when the second support pillar is inserted into a gap between at least two of the stacked units, positional accuracy of the second support pillar inserted into the gap and each stacked unit adjacent to the second support pillar is calibrated.

Specifically, a method for calibrating the positional accuracy of the second support pillar inserted into the gap and each stacked unit adjacent to the second support pillar needs to be determined based on a specific structure of the second support pillar of the first support pillar.

In some embodiments, the first support pillar and the second support pillar each include a first pillar body and a second pillar body that are sequentially disposed along an extension direction thereof, the second pillar body is disposed at a rear end of the first pillar body, a cross-sectional area of the second pillar body is less than a cross-sectional area of the first pillar body, and a step surface is provided between the second pillar body and the first pillar body; and
calibrating positional accuracy of each stacked unit and each second support pillar includes:
obtaining a position calibration apparatus, where the position calibration apparatus is provided with a plurality of first openings, a shape of the first opening is the same as a cross-sectional shape of the second pillar body, and a position arrangement of the first openings is in accordance with the preset arrangement pattern;
selecting a plurality of second pillar bodies as first calibration objects, where the first calibration objects are respectively from different stacked units, or are respectively from the stacked units and the second support pillar, and inserting each first calibration object into each first opening; and
if the first calibration object fails to be inserted into the first opening, adjusting a position of the stacked unit or the second support pillar corresponding to the first calibration object, so that the first calibration object is capable of being inserted into the first opening corresponding to the first calibration object.

In some implementations of this application, the method further includes: after securing the plurality of arranged stacked units by using the securing frame, the method further includes: removing the position calibration apparatus from the second pillar body.

In some other embodiments, at any point along an extension direction of the first support pillar and the second support pillar, the first support pillar and the second support pillar have a same cross-sectional shape and an equal area, and calibrating positional accuracy of each stacked unit and each second support pillar includes:
obtaining a film, where the film is made of a transparent material, the film is marked with position marks of a plurality of central holes, and a position arrangement of the position marks is in accordance with the preset arrangement pattern;
selecting the plurality of central holes as second calibration objects, where the second calibration objects are respectively from different stacked units, or are respectively from the stacked units and the second support pillar;
covering a front end face of each second calibration object with the film, observing a position of each second calibration object by using a microscope, and aligning each second calibration object with each position mark one by one; and
if the second calibration object is not aligned with the position mark, adjusting a position of the stacked unit or the second support pillar corresponding to the second calibration object, so that the second calibration object is capable of being aligned with the position mark corresponding to the second calibration object, where for example, tweezers may be used to nudge the stacked unit or the second support pillar to adjust the position of the stacked unit or the second support pillar, or another tool may be used to adjust the position of the stacked unit or the second support pillar.

In some implementations of this application, the target stacked units are determined based on spot detection of the stacked units; and
the spot detection of the stacked units includes:
selecting a plurality of optical fibers as detection objects, where the detection objects are respectively from different stacked units, or are respectively from the stacked units and the second support pillar;
   transmitting light through each detection object, and projecting light output from each detection object onto a spot detection apparatus, to form a second spot projection;
detecting positional accuracy of each second spot projection by using the spot detection apparatus, and determining whether a position of each second spot projection coincides with a standard position;
when the position of the second spot projection does not coincide with the standard position, adjusting a position of the first support pillar or the second support pillar corresponding to the second spot projection, so that the position of the second spot projection coincides with the standard position; and
determining that stacked units corresponding to coincident second spot projections are the target stacked units.

There are cumulative tolerances during stacking of the plurality of stacked units. Although a position of each stacked unit is previously calibrated by using the position calibration apparatus or the film, both calibration using the position calibration apparatus and calibration using the film are physical calibration manners, and can be used only for coarse positioning. Therefore, the spot detection apparatus further needs to be used to perform fine positioning on the positions of the optical fibers, so as to reduce adverse impact caused by the cumulative tolerances and improve positional accuracy of the optical fibers. Specifically, tweezers may be used to nudge the stacked units to adjust the positions of the stacked units, or another tool may be used to adjust the positions of the stacked units.

According to a second aspect, this application provides an optical fiber assembly. The optical fiber assembly is manufactured according to the manufacturing method in the first aspect. The optical fiber assembly includes a plurality of first support pillars used for supporting optical fibers, a central hole that penetrates through two ends of each first support pillar is provided at a center of the first support pillar, and one optical fiber is disposed in each central hole. For example, a material of the first support pillar may be any one of plastic, ceramic, glass, and metal.

In some implementations of this application, a cross-sectional shape of the first support pillar is any one of a circle, a regular triangle, a rectangle, a regular pentagon, and a hexagon. In actual production, first support pillars of different shapes may be selected based on arrangement patterns of different optical fiber arrays.

According to a third aspect, this application provides an optical fiber assembly. The optical fiber assembly is manufactured according to the manufacturing method in the first aspect. The optical fiber assembly includes a plurality of stacked units, each stacked unit includes a plurality of first support pillars used for supporting optical fibers, a central hole that penetrates through two ends of each first support pillar is provided at a center of the first support pillar, and one optical fiber is disposed in each central hole.

When there are a large quantity of optical fibers in the optical fiber assembly, during production, a plurality of first support pillars having optical fibers disposed inside may be first arranged and combined to form a stacked unit, positional accuracy of optical fibers in a single stacked unit is adjusted, then a plurality of stacked units are arranged and combined to form the optical fiber assembly, and positional accuracy of the stacked units is adjusted. When there are a large quantity of optical fibers, adjusting positional accuracy twice can still ensure positional accuracy of the optical fibers, and the operation is easy.

In some implementations of this application, the stacked units are arranged in a honeycomb shape, a second support pillar is disposed in a gap between the stacked units, the second support pillar has a same structure and size as the first support pillar, one optical fiber is inserted into a central hole of each second support pillar, and the first support pillars and second support pillars are arranged in a honeycomb shape as a whole.

In some implementations of this application, both the stacked units and the first support pillars located in a same stacked unit are arranged in a rectangular array.

In some implementations of this application, a cross-sectional shape of the first support pillar is any one of a circle, a regular triangle, a rectangle, a regular pentagon, and a hexagon.

In some implementations of this application, the optical fiber assembly further includes a securing frame, where the securing frame is configured to secure each stacked unit, and the securing frame includes a recessed frame and a pressing strip. The recessed frame is configured to accommodate each stacked unit, so that each stacked unit is capable of being inserted into the recessed frame along a direction perpendicular to the recessed frame, and a second opening is provided on one side of the recessed frame. The pressing strip is disposed on the second opening, the pressing strip is detachably connected to the recessed frame, and the pressing strip is capable of closing the second opening, so that the stacked unit inserted into the securing frame is constrained and the stacked unit is restricted from moving out of the securing frame.

In this application, the stacked units are assembled in the securing frame, and the stacked units and the securing frame may jointly constitute an optical fiber assembly of a high-precision large array. In some implementations of this application, positioning holes are provided on a coupling element coupled to the optical fiber assembly, guiding holes are provided on the recessed frame, a quantity of the guiding holes is the same as a quantity of the positioning holes, and when the optical fiber assembly is coupled to the coupling element, positions of the guiding holes are in a one-to-one correspondence with the positioning holes. An operator may insert a positioning rod into a positioning hole and a guiding hole at corresponding positions, so as to position the optical fiber assembly and the coupling element by using the positioning rod, thereby improving positioning accuracy and facilitating coupling between the optical fibers and the coupling element. For example, the coupling element may be a lens array.

According to a fourth aspect, this application provides an optical communication device, including any optical fiber assembly in the second aspect or the third aspect.

According to a fifth aspect, this application provides a holding apparatus, configured to hold together the combination of the plurality of arranged first support pillars in the first aspect. The holding apparatus includes a holding member, a third opening is provided on the holding member, the third opening penetrates through the holding member, and the third opening is configured to accommodate the first support pillars, so that the first support pillars are capable of being inserted into the third opening along a direction perpendicular to the third opening. The first support pillars inserted into the third opening form a stacked unit, and a shape of the third opening at least partially matches a shape of an outer contour of the stacked unit, so as to restrict the first support pillars from moving in the third opening along a direction perpendicular to an extension direction of the first support pillars.

In some implementations of this application, the first support pillars inserted into the third opening are arranged in a honeycomb shape, the holding member is annular, a plurality of first protrusions are disposed on a circumferential surface of the third opening, the first protrusions are arranged along a circumferential direction of the third opening, and each first protrusion is located between two adjacent first support pillars on an outer side of the stacked unit and is in contact with the first support pillars, to limit positions of the first support pillars in contact with the first protrusion along a first direction.

In some implementations of this application, the first support pillars are arranged in a chessboard shape, the holding member is plate-shaped, a plurality of second protrusions are disposed on a side wall of the third opening, and each second protrusion is located between two adjacent first support pillars on the outer side of the stacked unit and is in contact with the first support pillars, to limit positions of the first support pillars in contact with the second protrusion along the first direction.

In some implementations of this application, a plurality of threaded holes are provided on the side wall of the third opening, one screw is disposed in each threaded hole, and the screw is in threaded connection with the threaded hole. When the screw is tightened, each screw can abut against one first support pillar inserted into the third opening, to adjust a position of the first support pillar. Specifically, when the first support pillar needs to be moved in a direction close to a center of the third opening, only the screw corresponding to the first support pillar needs to be tightened inward, the screw may apply a force to the first support pillar, and pressing by the screw causes the first support pillar to elastically deform, so that an optical fiber inside the first support pillar moves in the direction close to the center of the third opening. When the first support pillar needs to be moved in a direction away from the center of the third opening, it is only necessary to loosen outward the screw corresponding to the first support pillar, so that the first support pillar can recover from the elastic deformation, thereby causing the optical fiber inside the first support pillar to move in the direction away from the center of the third opening.

According to a sixth aspect, this application provides a position calibration apparatus, configured to calibrate positional accuracy of each stacked unit and each second support pillar in the first aspect. The position calibration apparatus is plate-shaped, a plurality of first openings are provided on the position calibration apparatus, a position arrangement of the first openings is the same as a position arrangement of first support pillars, a diameter of the first opening is equal to a diameter of a second pillar body, and the first openings can be sleeved onto a plurality of second pillar bodies simultaneously. When a second pillar body can be inserted into a first opening corresponding to the second pillar body, it indicates that positional accuracy of a stacked unit or a second support pillar corresponding to the second pillar body meets a requirement. When the second pillar body cannot be inserted into the first opening corresponding to the second pillar body, it indicates that the positional accuracy of the stacked unit or the second support pillar corresponding to the second pillar body does not meet the requirement. In this case, a position of the stacked unit or the second support pillar corresponding to the second pillar body needs to be adjusted, so that the second pillar body can be inserted into the first opening corresponding to the second pillar body.

According to a seventh aspect, this application provides a spot detection apparatus, configured to perform spot detection on a first support pillar or a second support pillar that includes an optical fiber. The spot detection apparatus includes a collimating lens, a focusing lens, and a receiving plate that are sequentially disposed along a light emission direction in the optical fiber. The collimating lens is configured to collimate light. The focusing lens is configured to focus the light. The receiving plate is perpendicular to the light, and the receiving plate is configured to receive the light, so that the light can form a spot projection on the receiving plate. A target position diagram is provided on the receiving plate, and a standard position of each spot projection is marked on the target position diagram, so that an actual position of the spot projection can be compared with the standard position. When a position of a first spot projection coincides with a standard position, it indicates that positional accuracy of an optical fiber corresponding to the first spot projection meets a requirement. When the position of the first spot projection does not coincide with the standard position, it indicates that positional accuracy of the optical fiber corresponding to the first spot projection does not meet the requirement. In this case, a position of a first support pillar corresponding to the first spot projection needs to be adjusted, so that the position of the first spot projection coincides with the standard position.

According to an eighth aspect, this application provides a method for coupling an optical fiber assembly. The method is used to couple the optical fiber assembly in the second aspect to a lens array, the lens array includes a plurality of lenses, and the coupling method includes:
coupling an optical fiber in each first support pillar to a lens separately, and then combining first support pillars to form a coupling element between the optical fiber assembly and the lens array; or
coupling optical fibers in the combined optical fiber assembly to lenses in the lens array simultaneously.

According to a ninth aspect, this application provides a method for coupling an optical fiber assembly. The method is used to couple the optical fiber assembly in the third aspect to a lens array, the lens array includes a plurality of lens units, each lens unit includes a plurality of lenses, and the coupling method includes:
coupling an optical fiber in each first support pillar to a lens separately, and then combining first support pillars to form a coupling element between the optical fiber assembly and the lens array; or
coupling optical fibers in a stacked unit to lenses in a lens unit simultaneously, and then combining stacked units to form a coupling element between the optical fiber assembly and the lens array; or
coupling optical fibers in the combined optical fiber assembly to lenses in the lens array simultaneously.

### BRIEF DESCRIPTION OF DRAWINGS

FIG. 1 is a flowchart of a manufacturing method of an optical fiber assembly according to some embodiments of this application;
FIG. 2(a) is a diagram 1 of a structure of a first support pillar according to some embodiments of this application;
FIG. 2(b) shows an axial sectional view of FIG. 2(a);
FIG. 3(a) is an exploded diagram of a holding apparatus and a stacked unit according to some embodiments of this application;
FIG. 3(b) is a diagram of a combination of a holding apparatus and a stacked unit according to some embodiments of this application;
FIG. 3(c) shows a front view of FIG. 3(b);
FIG. 4(a) is a diagram of a spot detection apparatus according to some embodiments of this application;
FIG. 4(b) is a diagram of a receiving plate in FIG. 4(a);
FIG. 5(a) is a diagram of a structure of a holding apparatus according to some embodiments of this application;
FIG. 5(b) shows a sectional view of FIG. 5(a);
FIG. 6(a) is a diagram of a structure of a holding apparatus according to some other embodiments of this application;
FIG. 6(b) shows a sectional view of FIG. 6(a);
FIG. 7A to FIG. 7D are diagrams of preset arrangement patterns in a honeycomb shape according to some embodiments of this application;
FIG. 8A to FIG. 8D are diagrams of preset arrangement patterns in a chessboard shape according to some embodiments of this application;
FIG. 9(a) is a three-dimensional diagram of an optical fiber assembly according to some embodiments of this application;
FIG. 9(b) is a front view of an optical fiber assembly according to some embodiments of this application;
FIG. 10(a) is a diagram 1 of a honeycomb arrangement of stacked units according to some embodiments of this application;
FIG. 10(b) is a diagram 2 of a honeycomb arrangement of stacked units according to some embodiments of this application;
FIG. 11 is a diagram of a chessboard arrangement of stacked units according to some embodiments of this application;
FIG. 12 is a diagram of a position calibration apparatus according to some embodiments of this application;
FIG. 13(a) is a diagram of a position at which a first calibration object is selected according to some embodiments of this application;
FIG. 13(b) is a diagram of a position at which a first calibration object is selected according to some other embodiments of this application;
FIG. 14(a) is a diagram 2 of a structure of a first support pillar according to some embodiments of this application;
FIG. 14(b) shows an axial sectional view of FIG. 14(a);
FIG. 15 is a diagram of a film according to some embodiments of this application;
FIG. 16 is a diagram of a stacked unit according to some embodiments of this application;
FIG. 17A to FIG. 17F are diagrams illustrating cross-sectional shapes of first support pillars according to some embodiments of this application;
FIG. 18 is a diagram of a structure of coupling between a single optical fiber and a lens according to some embodiments of this application;
FIG. 19(a) is an exploded diagram of coupling between a stacked unit and a lens unit according to some embodiments of this application;
FIG. 19(b) is a diagram of a structure of coupling between a stacked unit and a lens unit according to some embodiments of this application;
FIG. 20(a) is an exploded diagram of coupling between an optical fiber assembly and a lens array according to some embodiments of this application;
FIG. 20(b) is a diagram of a structure of coupling between an optical fiber assembly and a lens array according to some embodiments of this application;
FIG. 21(a) is a diagram 1 of a structure of a silicon plate in Comparative Example 1;
FIG. 21(b) is a diagram 2 of a structure of a silicon plate in Comparative Example 1;
FIG. 22(a) is a diagram of a structure of a single fixing strip in Comparative Example 2;
FIG. 22(b) is a diagram of a structure of an optical fiber assembly provided in Comparative Example 2;
FIG. 23 is a diagram of a structure of an optical fiber assembly provided in Comparative Example 3;
FIG. 24 is a diagram of a structure of an optical fiber assembly provided in Comparative Example 4;
FIG. 25 is a diagram of a structure of an optical fiber assembly provided in Comparative Example 5;
FIG. 26 is a diagram of a structure of an optical fiber assembly provided in Comparative Example 6;
FIG. 27(a) is a diagram of a structure of a plurality of stacked capillary tubes in Comparative Example 7;
FIG. 27(b) is a diagram of stretching of capillary tubes in Comparative Example 7;
FIG. 27(c) is a diagram of a structure of an optical fiber preform in Comparative Example 7;
FIG. 28(a) is a diagram of a chessboard arrangement of first support pillars whose cross-sections are regular hexagons according to some embodiments of this application; and
FIG. 28(b) is a diagram of a honeycomb arrangement of first support pillars whose cross-sections are regular hexagons according to some embodiments of this application.

Reference numerals:
1-first support pillar; 11-central hole; 12-first pillar body; 13-second pillar body;
2-stacked unit; 21-bonding agent; 22-gap;
3-second support pillar;
4-securing frame; 41-recessed frame; 411-second opening; 412-guiding hole; 42-pressing strip;
5-holding apparatus; 51-third opening; 52-first protrusion; 53-second protrusion; 54-threaded hole; 55-screw;
6-position calibration apparatus; 61-first opening;
7-spot detection apparatus; 71-collimating lens; 72-focusing lens; 73-receiving plate; 74-target position diagram; 75-light source;
8-lens array; 81-lens; 82-lens unit;
9-film; 91-position mark;
10-optical fiber assembly;
100-optical fiber;
201-silicon plate; 202-micropore;
301-fixing strip; 302-groove body;
401-bundling member;
501-frame body;
601-positioning rod;
701-capillary tube; 702-optical fiber preform.

### DESCRIPTION OF EMBODIMENTS

To make objectives, technical solutions, and advantages of this application clearer, the following further describes implementations of this application in detail with reference to the accompanying drawings.

Featuring a large quantity of ports, a high density, and high accuracy, an optical fiber assembly (that is, an optical fiber array) can implement parallel transmission, connection, and switching of multiple optical signals, and is increasingly applied in the communication field. Typical applications include an optical switch, a surface emitter, a surface detector, an image-transmitting optical fiber bundle, a light-transmitting optical fiber bundle, and the like. This application provides a manufacturing method of an optical fiber assembly, an optical fiber assembly, and an optical communication device, to reduce difficulty in manufacturing the optical fiber assembly and improve positional accuracy of optical fibers.

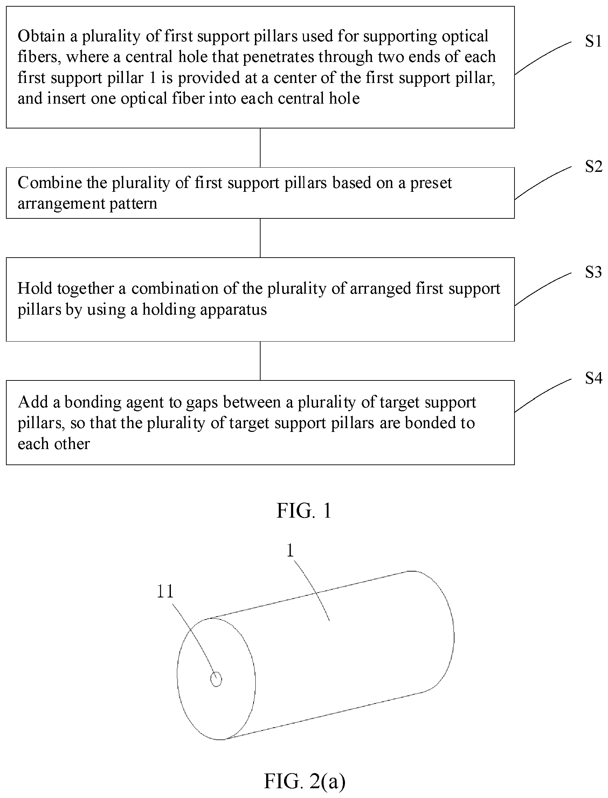

According to a first aspect, with reference to FIG. 1, FIG. 2(a), FIG. 2(b), and FIG. 3(a), this application provides a manufacturing method of an optical fiber assembly. The method includes the following steps.

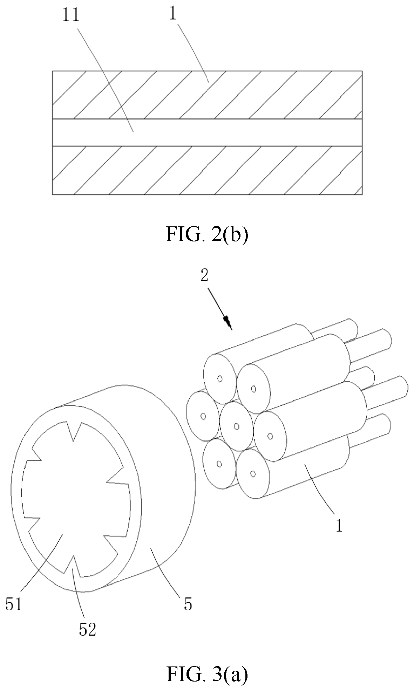

Step S1: Obtain a plurality of first support pillars 1 used for supporting optical fibers, as shown in FIG. 2(a) and FIG. 2(b), where a central hole 11 that penetrates through two ends of each first support pillar 1 is provided at a center of the first support pillar 1, and insert one optical fiber into each central hole 11.

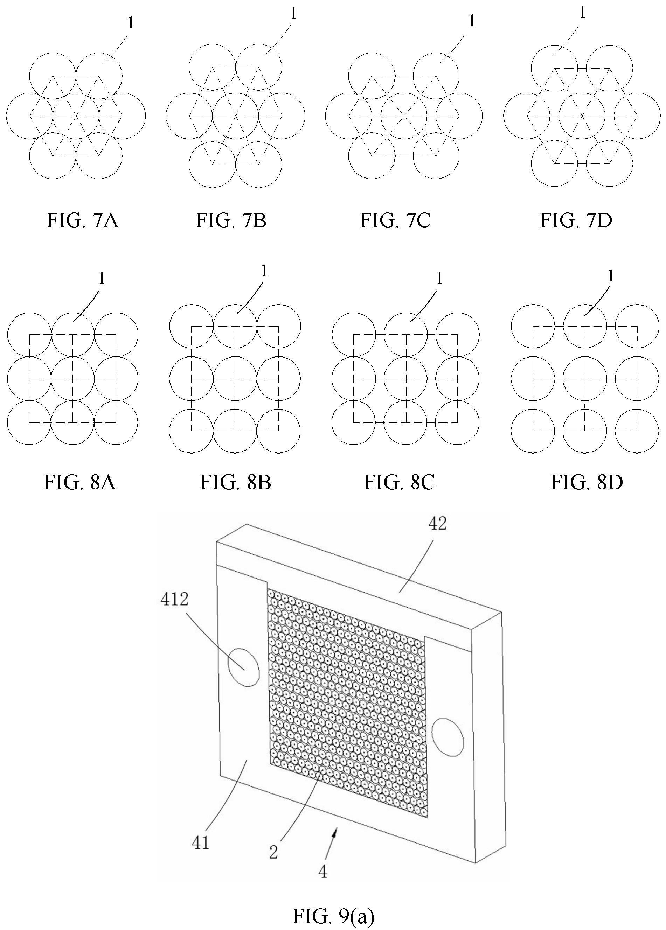

Step S2: Combine the plurality of first support pillars 1 based on a preset arrangement pattern. For example, the preset arrangement pattern may be a honeycomb shape (as shown in FIG. 7A to FIG. 7D) or a chessboard shape (as shown in FIG. 8A to FIG. 8D). When the preset arrangement pattern is the honeycomb shape, lines connecting centers of any four adjacent first support pillars 1 form a parallelogram, as shown by a dashed line in FIG. 7A to FIG. 7D. When the preset arrangement pattern is the chessboard shape, lines connecting centers of any four adjacent first support pillars 1 form a rectangle, as shown by a dashed line in FIG. 8A to FIG. 8D.

Step S3: Hold together a combination of the plurality of arranged first support pillars 1 by using a holding apparatus 5 shown in FIG. 3(a).

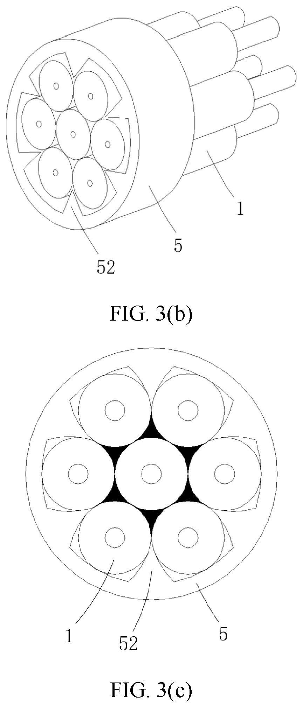

Specifically, with reference to FIG. 3(b) and FIG. 3(c), the holding apparatus 5 may be sleeved outside the plurality of arranged first support pillars 1, to hold together the combination of the plurality of first support pillars 1. FIG. 3(b) and FIG. 3(c) are respectively a three-dimensional diagram and a cross-sectional diagram of the holding apparatus 5 sleeved outside a stacked unit.

Step S4: Use a plurality of selected first support pillars 1 as target support pillars, and add a bonding agent to gaps between a plurality of target support pillars, so that the plurality of target support pillars are bonded to each other.

In a preferred case, the bonding agent may be added to gaps between all the target support pillars. In some cases, the bonding agent may alternatively be added to gaps between some target support pillars based on a requirement.

In an implementation of this application, optical fibers are inserted into the first support pillars 1, and the first support pillars 1 having the optical fibers disposed inside are combined to form an optical fiber array (that is, an optical fiber assembly). In this manner, the first support pillars 1 having the optical fibers disposed inside are combined as an independent individual unit. This can not only reduce difficulty in processing the optical fiber assembly, but also facilitate adjustment of positions of the first support pillars 1, so that the optical fibers can be aligned with coupling objects, thereby improving positional accuracy of the optical fibers.

In addition, in this application, the first support pillars 1 in which the optical fibers are mounted may be individually polished and coated before being combined. Therefore, an unqualified optical fiber may be locally reworked, and integrity and quality of an entire connector are not affected by poor processing such as polishing or coating of an optical fiber.

In addition, in this application, a quantity and density of the first support pillars 1 are adjusted, so that connectors with different quantities of optical fibers and different optical fiber densities can be assembled, and scalability is high. This can avoid use of different molds for processing different optical fiber assemblies and greatly reduce production costs. In addition, in this application, a single first support pillar 1 may be considered as a ferrule. The single support pillar is first coupled to a single lens, and then a plurality of first support pillars 1 coupled to lenses are combined, to form a coupling element between the optical fiber assembly and a lens array, thereby greatly reducing coupling difficulty. In addition, in this application, in a process of assembling the optical fiber assembly, the optical fibers in the optical fiber assembly may be connected to optical fibers in another optical fiber assembly for a loss test. When a loss is relatively high, the positions of the first support pillars 1 may be adjusted in time to improve positional accuracy of adjusting the optical fibers, thereby reducing the loss in time.

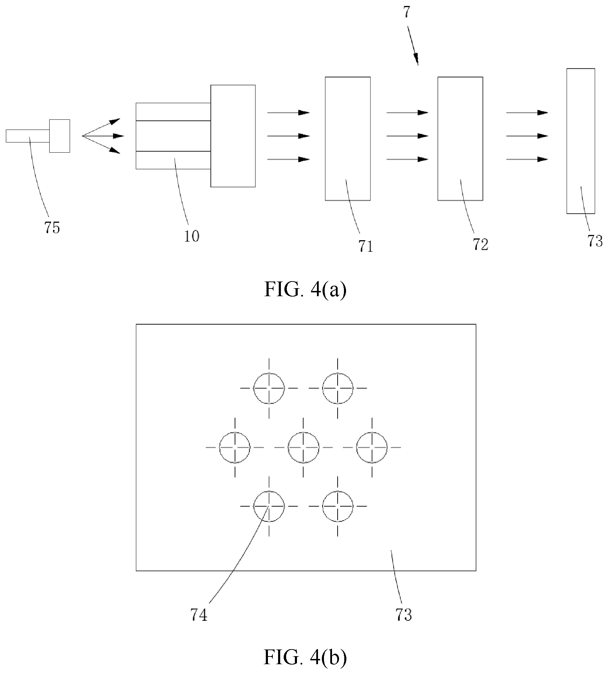

The target support pillars are first support pillars that meet a preset standard and that are selected from the plurality of combined first support pillars. The preset standard herein is to ensure, through spot detection of the first support pillars, that positional accuracy of the first support pillars meets a requirement. The determined first support pillars are bonded after the spot detection succeeds, so that positional accuracy of the first support pillars can be improved. In short, the target support pillars are determined based on spot detection of the support pillars. In some implementations of this application, the spot detection of the support pillars includes:
Step S41: Transmit light through each optical fiber in each first support pillar 1, and project light output from each optical fiber onto a spot detection apparatus 7, as shown in FIG. 4(a), to form a first spot projection. For example, light may be transmitted through the optical fibers in a time sequence, or light may be transmitted through the optical fibers simultaneously.
Step S42: Detect positional accuracy of each first spot projection by using the spot detection apparatus 7, and determine whether a position of each first spot projection coincides with a standard position.
Step S43: When the position of the first spot projection does not coincide with the standard position, adjust a position of the first support pillar 1 corresponding to the first spot projection, so that the position of the first spot projection coincides with the standard position. For example, an operator may use tweezers to nudge the first support pillar 1 to adjust the position of the first support pillar 1, or may use another tool to adjust the position of the first support pillar 1.
Step S44: Determine that first support pillars 1 corresponding to coincident first spot projections are the target support pillars.

Specifically, with reference to FIG. 4(a) and FIG. 4(b), the spot detection apparatus 7 includes a receiving plate 73, a target position diagram 74 is disposed on the receiving plate 73, and standard positions corresponding to all the optical fibers are marked on the target position diagram 74. After light is transmitted through an optical fiber, light output from the optical fiber is emitted to the receiving plate 73, and a first spot projection is formed on the receiving plate 73. If a position of the first spot projection coincides with a standard position on the target position diagram 74, it indicates that positional accuracy of the optical fiber corresponding to the first spot projection meets a requirement. If the position of the first spot projection does not coincide with the standard position on the target position diagram 74, it indicates that positional accuracy of the optical fiber corresponding to the first spot projection does not meet the requirement. In this case, the position of a first support pillar 1 corresponding to the first spot projection needs to be adjusted, so that the position of the first spot projection coincides with the standard position.

Due to tolerances in sizes of diameters of the first support pillars 1 and sizes of positions of central holes 11, after the plurality of first support pillars 1 are combined, tolerance accumulation is greater. In this application, the spot detection apparatus 7 is used to detect positions of the optical fibers, and the positions of the first support pillars 1 are adjusted based on a detection result, so that adverse impact caused by cumulative tolerances can be reduced, and positional accuracy of the optical fibers can be improved.

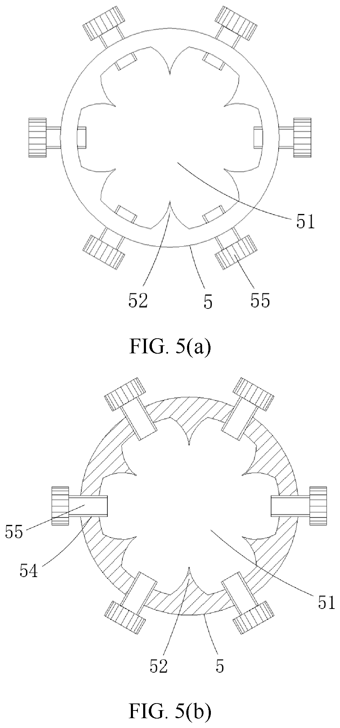

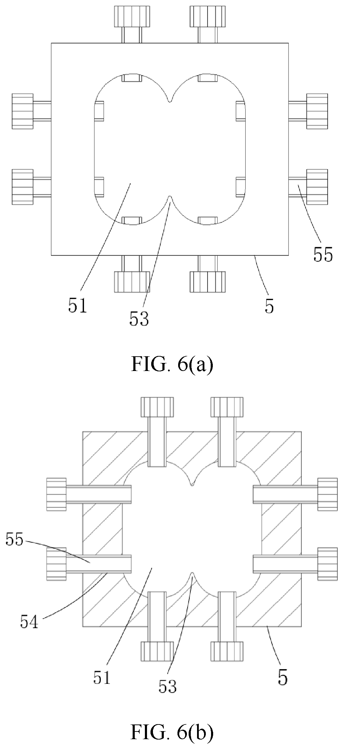

In some implementations of this application, with reference to FIG. 5(a), FIG. 5(b), FIG. 6(a), and FIG. 6(b), an adjustment assembly may be disposed on the holding apparatus 5, and the adjustment assembly is configured to adjust a relative position between at least one of the plurality of first support pillars 1 and another first support pillar 1. In addition, in the foregoing step S43, in some embodiments, the foregoing adjustment assembly may be used to adjust the position of the first support pillar 1 corresponding to the non-coincident first spot projection. For example, when the preset arrangement pattern of the first support pillars 1 is the honeycomb shape, the first support pillars 1 may be held and adjusted by using the holding apparatus 5 shown in FIG. 5(a) and FIG. 5(b). When the preset arrangement pattern of the first support pillars 1 is the chessboard shape, the first support pillars 1 may be held and adjusted by using the holding apparatus 5 shown in FIG. 6(a) and FIG. 6(b).

In some implementations of this application, with reference to FIG. 3(a), combining the plurality of first support pillars 1 based on the preset arrangement pattern includes: causing the first support pillars 1 to extend in a same direction, and aligning end faces of the first support pillars 1 at least on a first side.

A spacing between two adjacent first support pillars 1 is not limited in this application. The two adjacent first support pillars 1 may be in contact with each other, as shown in FIG. 7A and FIG. 8A. Alternatively, the two adjacent first support pillars 1 may be spaced apart from each other by a specific distance by disposing a spacer, as shown in FIG. 7D and FIG. 8D. When every two adjacent first support pillars 1 are in contact, if the preset arrangement pattern of the first support pillars 1 is the honeycomb shape, lines connecting centers of any four adjacent first support pillars 1 form a rhombus; or if the preset arrangement pattern of the first support pillars 1 is the chessboard shape, lines connecting centers of any four adjacent first support pillars 1 form a square. In some embodiments, some first support pillars 1 may be in contact with each other, and some first support pillars 1 are spaced apart by a specific distance, as shown in FIG. 7B, FIG. 7C, FIG. 8B, and FIG. 8C. During production, a spacing between the first support pillars 1 may be set based on an actual requirement.

In some implementations of this application, when the preset arrangement pattern is the honeycomb shape, a quantity of the first support pillars 1 is seven, where one of the first support pillars 1 is located at a center of the preset arrangement pattern, and remaining six first support pillars 1 are sequentially arranged around the first support pillar 1 located at the center. When the preset arrangement pattern is the chessboard shape, a quantity of the first support pillars 1 is four or nine, and a quantity of rows of the first support pillars 1 is equal to a quantity of columns of the first support pillars 1.

In some implementations of this application, the manufacturing method provided in this application further includes: removing the holding apparatus 5 from the plurality of first support pillars 1 in which the target support pillars have been bonded, to obtain a stacked unit 2 including the plurality of first support pillars 1, as shown in FIG. 3(a).

In some implementations of this application, the manufacturing method provided in this application further includes:
Step S5: Obtain a plurality of stacked units 2.
Step S6: Shape and secure the plurality of stacked units 2 by using a securing frame 4 (as shown in FIG. 9(a)).
Step S7: Add a bonding agent to gaps between a plurality of target stacked units 2, so that the plurality of target stacked units 2 are bonded to each other.

According to the foregoing technical solution, during manufacturing of an optical fiber assembly with a relatively large quantity of optical fibers, a plurality of stacked units 2 may be combined, so that operation steps can be simplified, and positional accuracy of the optical fibers can be ensured.

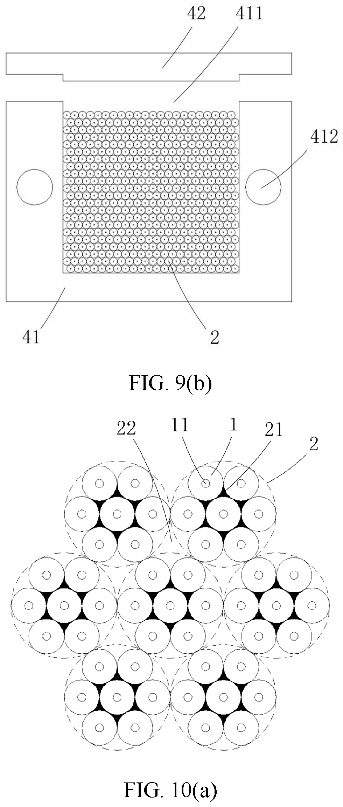

In some implementations of this application, with reference to FIG. 9(b), the securing frame 4 includes a recessed frame 41 and a pressing strip 42, and shaping and securing the plurality of stacked units 2 by using the securing frame 4 includes:
Step S61: Arrange the stacked units 2 based on an arrangement pattern of first support pillars 1 in the stacked units 2, and insert the stacked units 2 into the recessed frame 41. For example, when the arrangement pattern of the first support pillars 1 in the stacked units 2 is a honeycomb shape, the stacked units 2 are arranged in the honeycomb shape; or when the arrangement pattern of the first support pillars 1 in the stacked units 2 is a chessboard shape, the stacked units 2 are arranged in the chessboard shape.
Step S62: Determine that no gap sufficient for inserting a second support pillar exists between the stacked units 2 inserted into the recessed frame 41, where the second support pillar has a same structure and size as the first support pillar 1.
Step S63: Dispose the pressing strip 42 at an opening of the recessed frame 41, to secure the stacked units 2 and maintain relative displacements between the stacked units 2.

Specifically, a manner of determining that no gap sufficient for inserting the second support pillar exists between the stacked units 2 inserted into the recessed frame 41 needs to be determined based on a preset arrangement pattern of the stacked units 2.

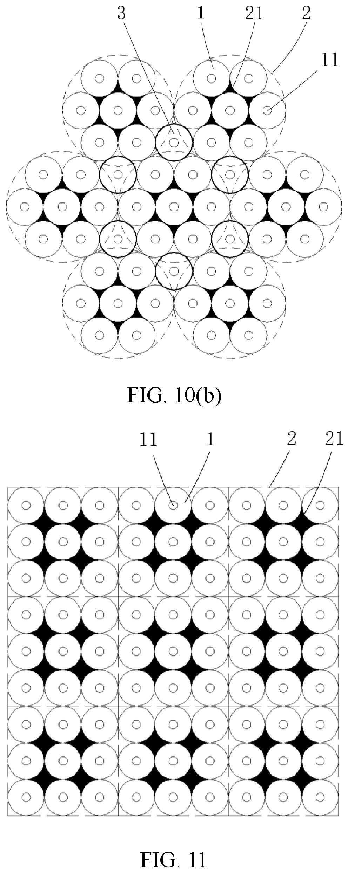

When the preset arrangement pattern is a honeycomb shape, with reference to FIG. 10(a), each circular dashed line in FIG. 10(a) includes a stacked unit 2, and a bonding agent 21 is added between first support pillars 1 in each stacked unit 2. It can be learned from FIG. 10(a) that, when the preset arrangement pattern is the honeycomb shape, there is a gap 22 between the stacked units 2. Therefore, determining that no gap sufficient for inserting the second support pillar exists between the stacked units 2 inserted into the recessed frame 41 means that all gaps have been filled. In some embodiments, this step includes:
Step S6211: Determine that a gap 22 sufficient for inserting the second support pillar exists between the stacked units 2.
Step S6212: Insert a second support pillar 3 (as shown by a circular thick solid line in FIG. 10(b)) having an optical fiber disposed inside into the gap 22 between the stacked units 2, to fill the gap 22.

When the preset arrangement pattern is a chessboard shape, with reference to FIG. 11, each rectangular dashed line in FIG. 11 includes a stacked unit 2, and a bonding agent 21 is added between first support pillars 1 in each stacked unit 2. It can be learned from FIG. 11 that, when the preset arrangement pattern is the chessboard shape, no gap exists between the stacked units 2. Therefore, determining that no gap sufficient for inserting the second support pillar exists between the stacked units 2 inserted into the recessed frame 41 includes:
Step S6221: Determine a shape of a rectangle formed by combining the stacked units 2. In this embodiment, if the stacked units 2 are combined into a rectangle, no gap exists between the stacked units 2.

In some implementations of this application, when the second support pillar 3 is inserted into a gap between at least two of the stacked units 2, positional accuracy of the second support pillar 3 inserted into the gap and each stacked unit 2 adjacent to the second support pillar 3 is calibrated. When no gap exists between the stacked units 2, positional accuracy of the stacked units 2 is calibrated.

The following describes in detail a manner of calibrating positional accuracy of the second support pillar 3 inserted into the gap and each stacked unit 2 adjacent to the second support pillar 3 by using an example in which the arrangement pattern of the stacked units 2 is the honeycomb shape. Specifically, a method for calibrating the positional accuracy of the second support pillar 3 inserted into the gap and each stacked unit 2 adjacent to the second support pillar 3 needs to be determined based on a specific structure of the second support pillar 3 of the first support pillar 1.

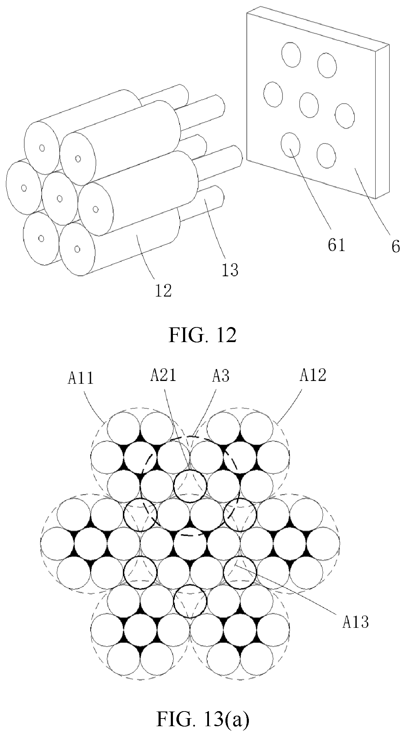

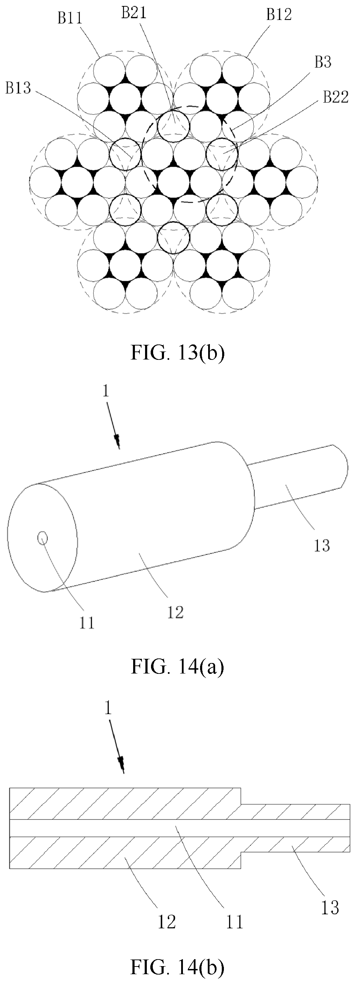

In some embodiments, with reference to FIG. 14(a) and FIG. 14(b), the first support pillar 1 and the second support pillar 3 each include a first pillar body 12 and a second pillar body 13 that are sequentially disposed along an extension direction thereof, the second pillar body 13 is disposed at a rear end of the first pillar body 12, a cross-sectional area of the second pillar body 13 is less than a cross-sectional area of the first pillar body 12, and a step surface is provided between the second pillar body 13 and the first pillar body 12. Calibrating positional accuracy of each stacked unit 2 and each second support pillar 3 includes:
Step S623: Obtain a position calibration apparatus 6 (as shown in FIG. 12), where the position calibration apparatus 6 is a plate body provided with a plurality of first openings 61, a shape of the first opening 61 is the same as a cross-sectional shape of the second pillar body 13, and positions of the first openings 61 are arranged in accordance with the preset arrangement pattern.
Step S624: Select a plurality of second pillar bodies 13 as first calibration objects, where the first calibration objects are respectively from different stacked units 2, or are respectively from the stacked units 2 and the second support pillar 3, and insert each first calibration object into each first opening 61, so that an end face of the position calibration apparatus 6 abuts against the step surface between the first pillar body 12 and the second pillar body 13.

Specifically, in an actual application, when the optical fiber assembly includes a relatively small quantity of support pillars, the operator may use one position calibration apparatus 6 to calibrate positions of all the support pillars in the optical fiber assembly at a time. When the optical fiber assembly includes a large quantity of support pillars, a plurality of position calibration apparatuses 6 may be used to calibrate positions of local support pillars in the optical fiber assembly respectively. The following uses local calibration as an example to describe a calibration manner in detail with reference to FIG. 13(a) and FIG. 13(b).

Support pillars included in a circular thick dashed line A3 in FIG. 13(a) are first calibration objects. It can be learned from FIG. 13(a) that the first calibration objects are from a stacked unit A11, a stacked unit A12, a stacked unit A13, and a second support pillar A21 respectively. When positions of the first calibration objects need to be calibrated, the operator sleeves a first opening 61 on the position calibration apparatus 6 onto each first calibration object from a rear part of the first calibration object. If each second pillar body 13 in the first calibration object can be inserted into each first opening 61, it indicates that relative positions of the stacked unit A11, the stacked unit A12, the stacked unit A13, and the second support pillar A21 meet requirements.

Support pillars included in a circular thick dashed line B3 in FIG. 13(b) are first calibration objects. It can be learned from FIG. 13(b) that the first calibration objects are from a stacked unit B11, a stacked unit B12, a stacked unit B13, a second support pillar B21, and a second support pillar B22 respectively. When positions of the first calibration objects need to be calibrated, the operator sleeves a first opening 61 on the position calibration apparatus 6 onto each first calibration object from a rear part of the first calibration object. If each second pillar body 13 in the first calibration object can be inserted into each first opening 61, it indicates that relative positions of the stacked unit B11, the stacked unit B12, the stacked unit B13, the second support pillar B21, and the second support pillar B22 meet requirements.

Step S625: If the first calibration object fails to be inserted into the first opening 61, adjust a position of the stacked unit 2 or the second support pillar 3 corresponding to the first calibration object, so that the first calibration object is capable of being inserted into the first opening 61 corresponding to the first calibration object. For example, tweezers may be used to nudge the stacked unit 2 or the second support pillar 3 to adjust the position of the stacked unit 2 or the second support pillar 3, or another tool may be used to adjust the position of the stacked unit 2 or the second support pillar 3.

For example, cross-sections of the first support pillar 1 and the second support pillar 3 are both circular, the first pillar body 12 and the second pillar body 13 are cylinders having coincident axes, and a diameter of the second pillar body 13 is less than a diameter of the first pillar body 12.

In some implementations of this application, the method further includes: after securing the plurality of arranged stacked units 2 by using the securing frame 4, the method further includes: removing the position calibration apparatus 6 from the second pillar body 13.

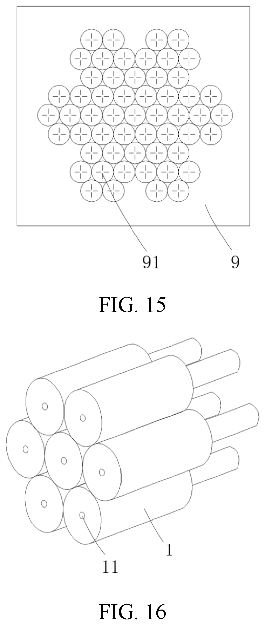

In some other embodiments, at any point along an extension direction of the first support pillar 1 and the second support pillar 3, the first support pillar 1 and the second support pillar 3 have a same cross-sectional shape and an equal area. For example, both the first support pillar 1 and the second support pillar 3 are cylinders, as shown in FIG. 2(a) and FIG. 2(b). Calibrating positional accuracy of each stacked unit 2 and each second support pillar 3 includes:
Step S626: Obtain a film 9, where the film 9 is made of a transparent material. With reference to FIG. 15, the film 9 is marked with position marks 91 corresponding to a plurality of central holes 11, and a position arrangement of the position marks 91 is in accordance with the preset arrangement pattern.
Step S627: Select the plurality of central holes 11 as second calibration objects, where the second calibration objects are respectively from different stacked units 2, or are respectively from the stacked units 2 and the second support pillar 3.
Step S628: Cover a front end face of each second calibration object with the film 9, observe a position of each second calibration object by using a microscope, and align each second calibration object with each position mark one by one.

If each second calibration object can be aligned with each position mark one by one, it indicates that a relative position of the stacked unit 2 or the second support pillar 3 corresponding to each second calibration object meets a requirement.

Step S629: If the second calibration object is not aligned with the position mark, adjust a position of the stacked unit 2 or the second support pillar 3 corresponding to the second calibration object, so that the second calibration object is capable of being aligned with the position mark corresponding to the second calibration object. For example, tweezers may be used to nudge the stacked unit 2 or the second support pillar 3 to adjust the position of the stacked unit 2 or the second support pillar 3, or another tool may be used to adjust the position of the stacked unit 2 or the second support pillar 3.

In some implementations of this application, the target stacked units 2 are determined based on spot detection of the stacked units; and the spot detection of the stacked units includes:
Step S71: Select a plurality of optical fibers as detection objects, where the detection objects are respectively from different stacked units 2, or are respectively from the stacked units 2 and the second support pillar 3.
Step S72: Transmit light through each detection object, and project light output from each detection object onto a spot detection apparatus 7, to form a second spot projection.
Step S73: Detect positional accuracy of each second spot projection by using the spot detection apparatus 7, and determine whether a position of each second spot projection coincides with a standard position.
Step S74: When the position of the second spot projection does not coincide with the standard position, adjust a position of the first support pillar 1 or the second support pillar 3 corresponding to the second spot projection, so that the position of the second spot projection coincides with the standard position.
Step S75: Determine that stacked units 2 corresponding to coincident second spot projections are the target stacked units 2.

Specifically, with reference to FIG. 4(a) and FIG. 4(b), the spot detection apparatus 7 includes a receiving plate 73, a target position diagram 74 is disposed on the receiving plate 73, and standard positions corresponding to all the detection objects are marked on the target position diagram 74. After light is transmitted through a detection object, light output from the detection object is emitted to the receiving plate 73, and a second spot projection is formed on the receiving plate 73. If a position of the second spot projection coincides with a standard position on the target position diagram 74, it indicates that positional accuracy of the detection object corresponding to the second spot projection meets a requirement. If the position of the second spot projection does not coincide with the standard position on the target position diagram 74, it indicates that the positional accuracy of the detection object corresponding to the second spot projection does not meet the requirement. In this case, a position of a stacked unit 2 corresponding to the second spot projection needs to be adjusted, so that the position of the second spot projection coincides with the standard position. For example, tweezers may be used to nudge the stacked unit 2 to adjust the position of the stacked unit 2, or another tool may be used to adjust the position of the stacked unit 2.

There are cumulative tolerances during stacking of the plurality of stacked units 2. Although a position of each stacked unit 2 is previously calibrated by using the position calibration apparatus 6 or the film 9, both calibration using the position calibration apparatus and calibration using the film are physical calibration manners, and can be used only for coarse positioning. Therefore, the spot detection apparatus 7 further needs to be used to perform fine positioning on the positions of the optical fibers, so as to reduce adverse impact caused by the cumulative tolerances and improve positional accuracy of the optical fibers.

According to a second aspect, this application provides an optical fiber assembly. The optical fiber assembly is formed by stacked units manufactured according to the manufacturing method in the first aspect. With reference to FIG. 16, the optical fiber assembly includes a plurality of first support pillars 1 used for supporting optical fibers, a central hole 11 that penetrates through two ends of each first support pillar 1 is provided at a center of the first support pillar 1, and one optical fiber is disposed in each central hole 11. For example, a material of the first support pillar 1 may be any one of plastic, ceramic, glass, and metal, and the first support pillars 1 may be bonded together by using a bonding agent (such as glue).

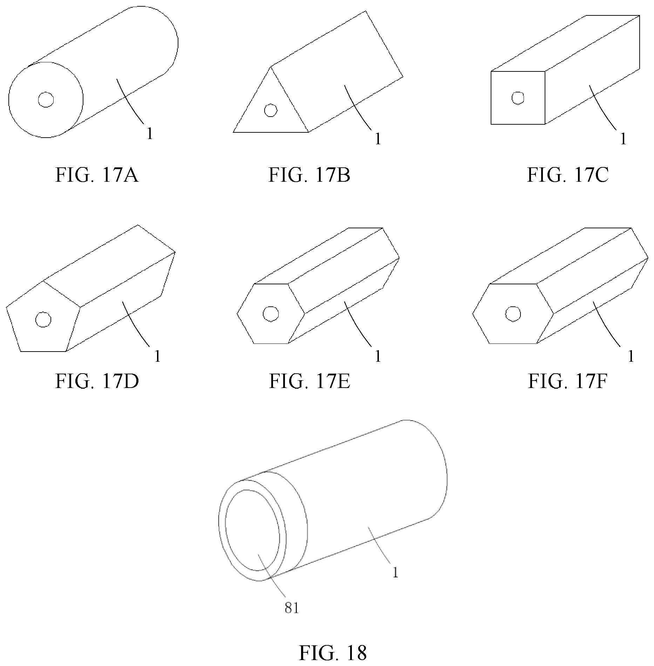

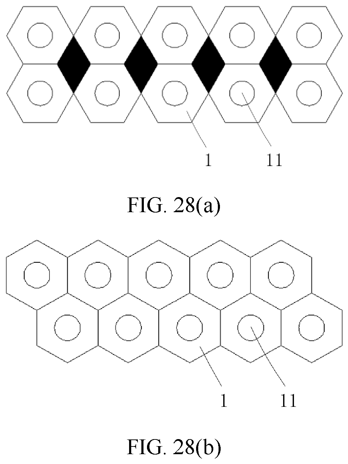

In some implementations of this application, with reference to FIG. 17A to FIG. 17F, a cross-sectional shape of the first support pillar 1 is any one of a circle (as shown in FIG. 17A), a regular triangle (as shown in FIG. 17B), a rectangle (as shown in FIG. 17C), a regular pentagon (as shown in FIG. 17D), a regular hexagon (as shown in FIG. 17E), and an irregular hexagon (as shown in FIG. 17F). In actual production, first support pillars 1 of different shapes may be selected based on an actual situation. For example, FIG. 28(a) is a diagram of a chessboard arrangement of first support pillars 1 whose cross-sections are regular hexagons, and FIG. 28(b) is a diagram of a honeycomb arrangement of first support pillars 1 whose cross-sections are regular hexagons.

According to a third aspect, this application provides an optical fiber assembly. The optical fiber assembly is manufactured according to the manufacturing method in the first aspect. With reference to FIG. 10(b) and FIG. 11, the optical fiber assembly includes a plurality of stacked units 2, each stacked unit 2 includes a plurality of first support pillars 1 used for supporting optical fibers, a central hole 11 that penetrates through two ends of each first support pillar 1 is provided at a center of the first support pillar 1, and one optical fiber is disposed in each central hole 11.

When there are a large quantity of optical fibers in the optical fiber assembly, during production, a plurality of first support pillars 1 having optical fibers disposed inside may be first arranged and combined to form a stacked unit 2, positional accuracy of optical fibers in a single stacked unit 2 is adjusted, and then the optical fibers in the single stacked unit 2 are bonded together by using a bonding agent. Then a plurality of stacked units 2 are arranged and combined to form the optical fiber assembly, positional accuracy of the stacked units 2 is adjusted, and the stacked units 2 are bonded together by using a bonding agent. When there are a large quantity of optical fibers, adjusting positional accuracy twice can still ensure that positional accuracy of the optical fibers meets a requirement, and the operation is easy.

In some implementations of this application, with reference to FIG. 10(b), the stacked units 2 are arranged in a honeycomb shape, a second support pillar 3 is disposed in a gap between the stacked units 2, the second support pillar 3 has a same structure and size as the first support pillar 1, one optical fiber is inserted into a central hole of each second support pillar 3, and the first support pillars 1 and second support pillars 3 are arranged in a honeycomb shape as a whole.

In some implementations of this application, with reference to FIG. 11, both the stacked units 2 and the first support pillars 1 located in a same stacked unit 2 are arranged in a rectangular array.

In some implementations of this application, with reference to FIG. 17A to FIG. 17F, a cross-sectional shape of the first support pillar 1 is any one of a circle (as shown in FIG. 17A), a regular triangle (as shown in FIG. 17B), a rectangle (as shown in FIG. 17C), a regular pentagon (as shown in FIG. 17D), a regular hexagon (as shown in FIG. 17E), and an irregular hexagon (as shown in FIG. 17F). In actual production, first support pillars 1 of different shapes may be selected based on an actual situation. For example, FIG. 28(a) is a diagram of a chessboard arrangement of first support pillars 1 whose cross-sections are regular hexagons, and FIG. 28(b) is a diagram of a honeycomb arrangement of first support pillars 1 whose cross-sections are regular hexagons.

In some implementations of this application, with reference to FIG. 9(a) and FIG. 9(b), the optical fiber assembly further includes a securing frame 4, where the securing frame 4 is configured to secure each stacked unit 2. Specifically, the securing frame 4 includes a recessed frame 41 and a pressing strip 42. The recessed frame 41 is configured to accommodate each stacked unit 2, so that each stacked unit 2 is capable of being inserted into the recessed frame 41 along a direction perpendicular to the recessed frame 41, and a second opening 411 is provided on one side of the recessed frame 41. The pressing strip 42 is disposed on the second opening 411, the pressing strip 42 is detachably connected to the recessed frame 41, and the pressing strip 42 is capable of closing the second opening 411, so that the stacked unit 2 inserted into the securing frame 4 is constrained and the stacked unit 2 is restricted from moving along a direction perpendicular to an extension direction of the stacked unit 2. For example, the pressing strip 42 may be connected to the recessed frame 41 by using a bolt.

In this application, the stacked units 2 are assembled in the securing frame 4, and the stacked units 2 and the securing frame 4 may jointly constitute an optical fiber assembly of a high-precision large array. In some implementations of this application, positioning holes are provided on a coupling element coupled to the optical fiber assembly, guiding holes 412 are provided on the recessed frame 41, and a quantity of the guiding holes 412 is the same as a quantity of the positioning holes. When the optical fiber assembly is coupled to the coupling element, positions of the guiding holes 412 are in a one-to-one correspondence with the positioning holes. An operator may insert a positioning rod into a positioning hole and a guiding hole 412 at corresponding positions, so as to position the optical fiber assembly and the coupling element by using the positioning rod, thereby improving positioning accuracy and facilitating coupling between the optical fibers and the coupling element. For example, the coupling element may be a lens array.

According to a fourth aspect, this application provides an optical communication device, including any optical fiber assembly in the second aspect or the third aspect. A specific type of the optical communication device is not limited in this application. Any optical communication device including any optical fiber assembly in the second aspect or the third aspect falls within the protection scope of this application. For example, the optical communication device may be an optical switch, a surface emitter, a surface detector, or an MEMS OXC.

According to a fifth aspect, this application provides a holding apparatus 5, configured to hold together the combination of the plurality of arranged first support pillars 1 in the first aspect. With reference to FIG. 3(a), FIG. 3(b), and FIG. 3(c), the holding apparatus 5 includes a holding member, a third opening 51 is provided on the holding member, the third opening 51 penetrates through the holding member, and the third opening 51 is configured to accommodate each first support pillar 1, so that each first support pillar 1 can be inserted into the third opening 51 along a direction perpendicular to the third opening 51. The first support pillars 1 inserted into the third opening 51 form a stacked unit 2, and a shape of the third opening 51 at least partially matches a shape of an outer contour of the stacked unit 2, so as to restrict the first support pillars 1 from moving along a direction perpendicular to an extension direction of the first support pillars 1.

In some implementations of this application, with reference to FIG. 5(a) and FIG. 5(b), the first support pillars 1 inserted into the third opening 51 are arranged in a honeycomb shape, the holding member is annular, a plurality of first protrusions 52 are disposed on a circumferential surface of the third opening 51, and the first protrusions 52 are arranged along a circumferential direction of the third opening 51. When the stacked unit 2 is inserted into the third opening 51, each first protrusion 52 is located between two adjacent first support pillars 1 on an outer side of the stacked unit 2 and is in contact with the first support pillars 1, to restrict the first support pillars 1 in contact with the first protrusion 52 from moving along a direction perpendicular to the extension direction of the first support pillars 1.

In some implementations of this application, with reference to FIG. 6(a) and FIG. 6(b), the first support pillars 1 are arranged in a chessboard shape, the holding member is plate-shaped, and a plurality of second protrusions 53 are disposed on a side wall of the third opening 51. When the stacked unit 2 is inserted into the third opening 51, each second protrusion 53 is located between two adjacent first support pillars 1 on the outer side of the stacked unit 2 and is in contact with the first support pillars 1, to restrict the first support pillars 1 in contact with the second protrusion 53 from moving along a direction perpendicular to the extension direction of the first support pillars 1.

In some implementations of this application, with reference to FIG. 5(a), FIG. 5(b), FIG. 6(a), and FIG. 6(b), a plurality of threaded holes 54 are provided on the side wall of the third opening 51, one screw 55 is disposed in each threaded hole 54, and the screw 55 is in threaded connection with the threaded hole 54. When the screw 55 is tightened, each screw 55 can abut against one first support pillar 1 inserted into the third opening 51, to adjust a position of the first support pillar 1.

Specifically, when the first support pillar 1 needs to be moved in a direction close to a center of the third opening 51, only the screw 55 corresponding to the first support pillar 1 needs to be tightened inward, the screw 55 may apply a force to the first support pillar 1, and pressing by the screw 55 causes the first support pillar 1 to move or elastically deform, so that an optical fiber inside the first support pillar 1 moves in the direction close to the center of the third opening 51. When the first support pillar 1 needs to be moved in a direction away from the center of the third opening 51, it is only necessary to loosen outward the screw 55 corresponding to the first support pillar 1, so that the first support pillar 1 can recover from the elastic deformation in absence of the pressing force, thereby causing the optical fiber inside the first support pillar 1 to move in the direction away from the center of the third opening 51.

According to a sixth aspect, this application provides a position calibration apparatus 6, configured to calibrate positional accuracy of each stacked unit 2 and each second support pillar 3 in the first aspect. With reference to FIG. 12, the position calibration apparatus 6 is plate-shaped, a plurality of first openings 61 are provided on the position calibration apparatus 6, a position arrangement of the first openings 61 is the same as a position arrangement of first support pillars 1, a diameter of the first opening 61 is equal to a diameter of a second pillar body 13, and the first openings 61 can be sleeved onto a plurality of second pillar bodies 13 simultaneously. When the plurality of second pillar bodies 13 can be simultaneously inserted into the first openings 61 corresponding to the second pillar bodies 13, it indicates that positional accuracy of stacked units 2 or second support pillars 3 corresponding to the second pillar bodies 13 meets a requirement. When one of the plurality of second pillar bodies 13 cannot be inserted into a first opening 61 corresponding to the second pillar body 13, it indicates that positional accuracy of a stacked unit 2 or a second support pillar 3 corresponding to the second pillar body 13 does not meet the requirement. In this case, a position of the stacked unit 2 or the second support pillar 3 corresponding to the second pillar body 13 needs to be adjusted, so that the second pillar body 13 can be inserted into the first opening 61 corresponding to the second pillar body 13.

According to a seventh aspect, this application provides a spot detection apparatus 7, configured to perform spot detection on a first support pillar 1 or a second support pillar 3 that includes an optical fiber. With reference to FIG. 4(a) and FIG. 4(b), the spot detection apparatus 7 includes a collimating lens 71, a focusing lens 72, and a receiving plate 73 that are sequentially disposed along a light emission direction (as shown by an arrow direction in FIG. 4(a)) in the optical fiber. The collimating lens 71 is configured to collimate light. The focusing lens 72 is configured to focus the light. The receiving plate 73 is perpendicular to the light, and the receiving plate 73 is configured to receive the light, so that the light can form a spot projection on the receiving plate 73. A target position diagram 74 is provided on the receiving plate 73, and a standard position of each spot projection is marked on the target position diagram 74, so that an actual position of the spot projection can be compared with the standard position. When a position of a first spot projection coincides with a standard position, it indicates that positional accuracy of an optical fiber corresponding to the first spot projection meets a requirement. When the position of the first spot projection does not coincide with the standard position, it indicates that positional accuracy of the optical fiber corresponding to the first spot projection does not meet the requirement. In this case, a position of a first support pillar 1 or a second support pillar 3 corresponding to the first spot projection needs to be adjusted, so that the position of the first spot projection coincides with the standard position.

In a stacking process, cumulative tolerances usually exist in the first support pillar 1 and the second support pillar 3. In this application, the spot detection apparatus 7 is used to detect the positional accuracy of the optical fiber, and the position of the first support pillar 1 or the second support pillar 3 is adjusted based on a detection result, to ensure that the positional accuracy of the optical fiber meets the requirement, thereby increasing a qualification rate of an optical fiber assembly.

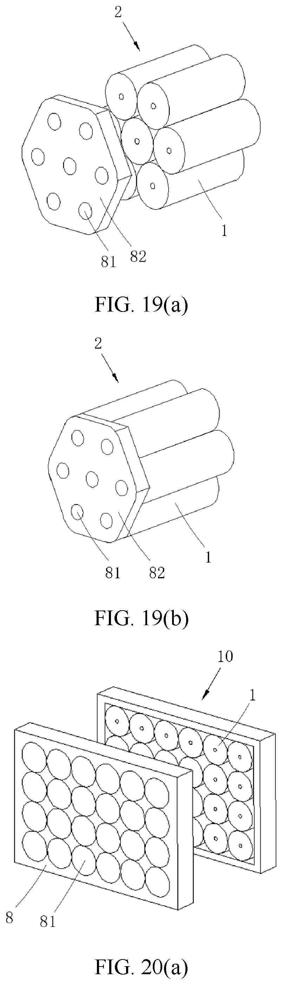

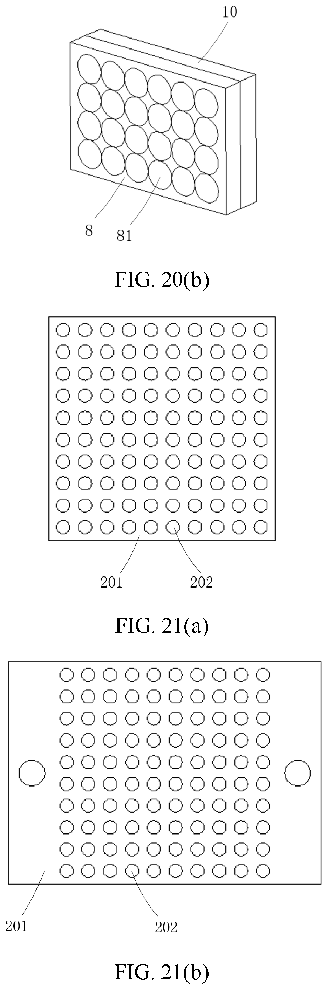

According to an eighth aspect, this application provides a method for coupling an optical fiber assembly. The method is used to couple the optical fiber assembly in the second aspect to a lens array 8, the lens array 8 includes a plurality of lenses 81, and the coupling method includes:
coupling an optical fiber in each first support pillar 1 to a lens 81 separately, as shown in FIG. 18, and then combining first support pillars 1 to form a coupling element between the optical fiber assembly and the lens array; or
coupling optical fibers in the combined optical fiber assembly 10 to lenses 81 in the lens array 8 simultaneously, as shown in FIG. 20(a) and FIG. 20(b).

According to a ninth aspect, this application provides a method for coupling an optical fiber assembly. The method is used to couple the optical fiber assembly in the third aspect to a lens array 8, the lens array 8 includes a plurality of lens units 82, each lens unit 82 includes a plurality of lenses 81, and the coupling method includes:
coupling an optical fiber in each first support pillar 1 to a lens 81 separately, as shown in FIG. 18, and then combining first support pillars 1 to form a coupling element between the optical fiber assembly and the lens array; or
coupling optical fibers in a stacked unit 2 to lenses 81 in a lens unit 82 simultaneously, as shown in FIG. 19(a) and FIG. 19(b), and then combining stacked units 2 to form a coupling element between the optical fiber assembly and the lens array; or
coupling optical fibers in the combined optical fiber assembly 10 to lenses 81 in the lens array 8 simultaneously, as shown in FIG. 20(a) and FIG. 20(b).

The foregoing three coupling methods have different advantages. First coupling the optical fiber in each first support pillar 1 to one lens 81 separately and then combining the first support pillars 1 to form the coupling element between the optical fiber assembly and the lens array 8 can reduce difficulty in coupling the optical fiber assembly to the lens array 8. Simultaneously coupling the optical fibers in the combined optical fiber assembly 10 to the lenses 81 in the lens array 8 can improve coupling efficiency. Simultaneously coupling optical fibers in one stacked unit 2 to lenses 81 in one lens unit 82 and then combining the stacked units 2 can achieve a combination of the advantages of the foregoing two methods. In an actual application, an operator may select an appropriate coupling manner based on a size of an optical fiber assembly and a specific actual situation.

Compared with the optical fiber assembly in some other implementations, implementations of this application have better effects. The following describes some other implementations by using several comparative examples, so that a person skilled in the art can better understand differences between the implementations of this application and some other implementations and beneficial effects.

### Comparative Example 1

With reference to FIG. 21(a) and FIG. 21(b), an optical fiber assembly provided in this comparative example includes a silicon plate 201, a plurality of micropores 202 are provided on the silicon plate 201, and one optical fiber is inserted into each micropore 202. For example, the micropores 202 may be arranged in a rectangular array. In this comparative example, a large quantity of optical fibers may be mounted on the silicon plate 201, and the silicon plate 201 is characterized by a large optical fiber capacity and high integration. However, because the silicon plate 201 is limited by a semiconductor process, the silicon plate 201 is relatively thin. Therefore, the micropore 202 is relatively short in length, resulting in poor mounting stability of the optical fiber. In addition, in this comparative example, a process of the optical fiber assembly is complex and costs are relatively high, and all the micropores 202 need to be filled with optical fibers before the entire assembly is polished and coated. In this process, poor processing such as polishing or coating of a single optical fiber affects integrity and quality of an entire connector.

Compared with Comparative Example 1, in implementations of this application, a first support pillar 1 is used to secure an optical fiber. Because the first support pillar 1 is relatively long, and a central hole 11 is also relatively deep, mounting stability of the optical fiber can be improved. In addition, in implementations of this application, support pillars in which optical fibers are mounted may be individually polished and coated before being combined and arranged. Therefore, an unqualified optical fiber may be locally reworked, and integrity and quality of an entire connector are not affected by poor processing such as polishing or coating of an optical fiber.

### Comparative Example 2

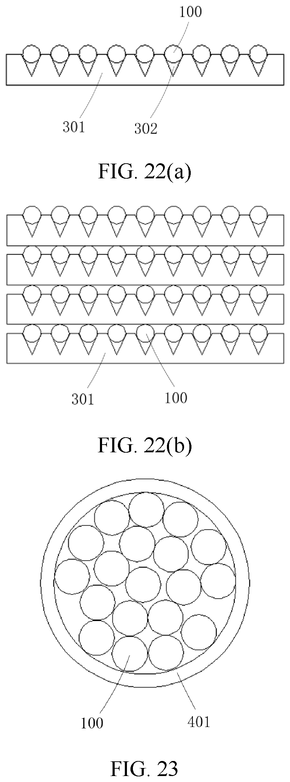

With reference to FIG. 22(a) and FIG. 22(b), an optical fiber assembly provided in this comparative example includes a plurality of fixing strips 301 that are sequentially stacked along a vertical direction, each fixing strip 301 is provided with a plurality of grooves 302 that are spaced apart from each other along an extension direction of the fixing strip 301, the grooves 302 are V-shaped, and one optical fiber 100 is disposed in each of the grooves 302. In this comparative example, positioning accuracy of optical fibers located on a same fixing strip 301 is relatively high, but positioning between fixing strips 301 at each layer is relatively difficult. Therefore, positional accuracy of an optical fiber is relatively low. Compared with Comparative Example 2, in implementations of this application, first support pillars 1 having optical fibers disposed inside are combined and arranged as an independent individual unit. This manner may facilitate adjustment of a position of a first support pillar 1, so that an optical fiber can be aligned with a coupling object, thereby improving positional accuracy of the optical fiber.

### Comparative Example 3

With reference to FIG. 23, an optical fiber assembly provided in this comparative example includes a plurality of stacked optical fibers 100, and a bundling member 401 wraps outer portions of the optical fibers 100 to bundle and secure the optical fibers 100. In this method, positions of the optical fibers 100 are random, and accurate positioning and arrangement cannot be performed. Compared with Comparative Example 3, in implementations of this application, first support pillars 1 may be arranged to accurately position and arrange optical fibers, thereby improving positional accuracy of the optical fibers.

### Comparative Example 4

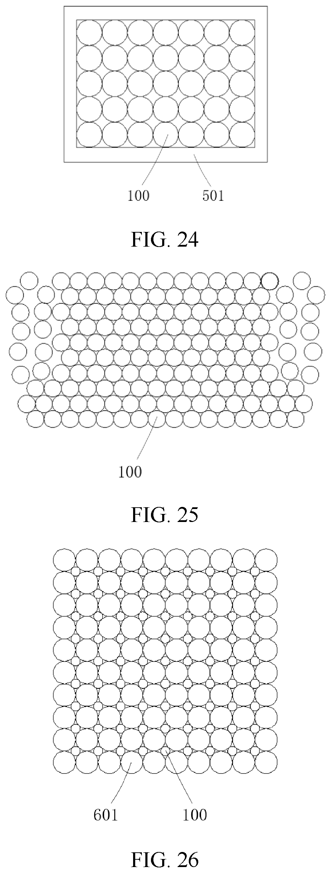

With reference to FIG. 24, an optical fiber assembly provided in this comparative example includes a frame body 501 and a plurality of optical fibers 100 disposed in the frame body 501, and the optical fibers 100 are arranged in a dense rectangular array in the frame body 501. The optical fibers 100 in this comparative example need to be closely packed without gaps. Therefore, a spacing between the optical fibers 100 cannot be adjusted randomly, and scalability is poor. In addition, relatively large cumulative tolerances are generated during stacking of the optical fibers 100, and each optical fiber 100 is prone to deformation due to compression, resulting in relatively poor positional accuracy. Compared with Comparative Example 4, in implementations of this application, connectors with different quantities of optical fibers and different optical fiber densities may be assembled by adjusting a quantity and density of first support pillars 1, so that scalability is high. In addition, positions of the first support pillars 1 can be conveniently adjusted, and optical fibers are not subject to compression in the first support pillars 1, thereby improving positional accuracy of the optical fibers.

### Comparative Example 5

With reference to FIG. 25, an optical fiber assembly provided in this comparative example includes a plurality of stacked optical fibers 100, and the optical fibers 100 form a two-dimensional optical fiber array. Optical fibers at a bottom layer are fixed to a bottom substrate having a V-shaped groove, each optical fiber located at an upper layer is tangential to two optical fibers at an immediately lower layer, and various layers of optical fibers are stacked upward in sequence. Optical fibers at an uppermost layer are covered with a top substrate having a V-shaped groove, and the optical fiber array is clamped between the top substrate and the bottom substrate. This comparative example is applicable only to scenarios in which optical fibers are closely packed tangentially. A spacing between optical fibers cannot be adjusted randomly, and an arrangement density is limited. In addition, a clamping force provided by the bottom substrate and the top substrate for the optical fibers is limited. When there are many layers of optical fibers, the optical fibers tend to become loose, resulting in poor scalability. Compared with Comparative Example 5, an optical fiber assembly provided in implementations of this application may be assembled into connectors with different quantities and densities of optical fibers by adjusting a quantity and density of first support pillars 1, and when there are a relatively large quantity of layers of optical fibers, the optical fibers are not loose. Therefore, scalability is high.

### Comparative Example 6

With reference to FIG. 26, an optical fiber assembly provided in this comparative example includes a plurality of positioning rods 601, where the positioning rods 601 are arranged in a rectangular array structure, and adjacent positioning rods 601 are tangential to each other. An optical fiber 100 is disposed in a gap between four positioning rods 601, and the positioning rods 601 can constrain the optical fiber 100. In this comparative example, the positioning rods 601 have outer diameter tolerances and stacking cumulative tolerances. As a result, positional accuracy of optical fibers 100 is uncontrollable. Compared with Comparative Example 6, in implementations of this application, an optical fiber is disposed in a first support pillar 1, so that a position of the first support pillar 1 can be conveniently adjusted, and the optical fiber can be aligned with a coupling object, thereby improving positional accuracy of the optical fiber.

### Comparative Example 7

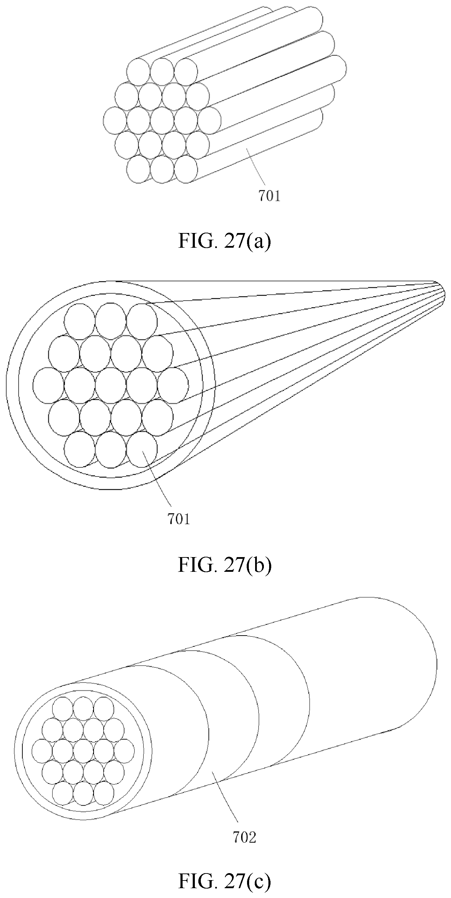

With reference to FIG. 27(a), FIG. 27(b), and FIG. 27(c), an optical fiber preform positioning method is used in this comparative example. First, an accurately positioned micropore array is fabricated, as shown in FIG. 27(a), that is, capillary tubes 701 are closely arranged to form a cylindrical blank. Then the cylindrical blank is drawn by using a fabrication process of a photonic crystal fiber preform, as shown in FIG. 27(b). Finally, the cylindrical blank is drawn into an optical fiber preform 702, then the drawn optical fiber preform 702 is sliced into sheets, as shown in FIG. 27(c), to obtain a positioning micropore plate, and finally optical fibers are inserted into micropores to form an optical fiber array. In the process of drawing the optical fiber preform 702 in this comparative example, the micropores may be deformed, resulting in relatively low positioning accuracy of optical fibers. Compared with Comparative Example 7, in implementations of this application, a central hole 11 is processed at a center of a first support pillar 1, and the central hole 11 is not deformed. Therefore, an optical fiber inserted into the central hole 11 does not have low positional accuracy due to deformation of the central hole 11, and positional accuracy of the optical fiber can be improved.

The foregoing describes implementations of this application in specific embodiments, and other advantages and effects of this application may be readily understood by a person skilled in the art from content disclosed in this specification. Although this application is described with reference to some embodiments, it does not mean that a characteristic of this application is limited only to this implementation. On the contrary, a purpose of describing this application with reference to the implementations is to cover other alternatives or modifications that may be derived based on claims of this application. This application may alternatively be implemented without using these details. In addition, to avoid confusion or obscuring a focus of this application, some specific details are omitted in the description. It should be noted that embodiments and features in embodiments in this application may be combined with each other in absence of conflicts.

In embodiments of this application, the terms "first", "second", and "third" are used only for descriptive purposes, and cannot be understood as an indication or implication of relative importance or an implication of a quantity of indicated technical features. Therefore, the features defined with "first", "second", and "third" may explicitly or implicitly include one or more of the features.

The term "and/or" in embodiments of this application describes only an association relationship between associated objects and represents that three relationships may exist. For example, A and/or B may indicate three cases: Only A exists, both A and B exist, and only B exists. In addition, a character "/" in this specification generally indicates an "or" relationship between contextually associated objects.

In the descriptions of embodiments of this application, it should be noted that terms "installation" and "connection" should be understood in a broad sense unless there is a clear stipulation and limitation. For example, the "connection" may be a detachable connection, a nondetachable connection, a direct connection, or an indirect connection through an intermediate medium. Orientation terms mentioned in embodiments of this application, for example, "left", "right", "inside", and "outside", are merely directions with reference to the accompanying drawings. Therefore, the orientation terms are used to better and more clearly describe and understand embodiments of this application, instead of indicating or implying that a specified apparatus or element needs to have a specific orientation and be constructed and operated in the specific orientation. Therefore, this cannot be understood as a limitation on embodiments of this application. "A plurality of" means at least two.

In the descriptions of this application, it should be noted that orientations or position relationships indicated by terms "up", "down", "left", "right", and the like are orientations or position relationships based on the accompanying drawings, and are used only for conveniently describing this application and simplifying the descriptions, but do not indicate or imply that a specified apparatus or element needs to have a specific orientation and be constructed and operated in the specific orientation, and therefore cannot be understood as a limitation on this application.

In the descriptions of this application, it should be noted that unless otherwise explicitly specified and defined, terms such as "dispose", "mount", "connect", and "contact" should be understood in a broad sense. For example, such terms may indicate a fixed connection, a detachable connection, or an integral connection, may indicate a mechanical connection or an electrical connection, and may indicate a direct connection, an indirect connection through an intermediate medium, or internal communication between two elements. For a person of ordinary skill in the art, specific meanings of the terms in this application may be understood based on a specific situation.

It is clear that a person skilled in the art can make various modifications and variations to this application without departing from the spirit and scope of this application. Therefore, this application is intended to cover these modifications and variations of this application provided that they fall within the protection scope defined by the following claims and equivalent technologies thereof.

## Claims

1. A manufacturing method of an optical fiber assembly, comprising:
obtaining a plurality of first support pillars used for supporting optical fibers, wherein a central hole that penetrates through two ends of each first support pillar is provided at a center of the first support pillar, and inserting one optical fiber into each central hole;
combining the plurality of first support pillars based on a preset arrangement pattern;
holding together a combination of the plurality of arranged first support pillars by using a holding apparatus; and
adding a bonding agent to gaps between a plurality of target support pillars, so that the plurality of target support pillars are bonded to each other.

2. The manufacturing method according to claim 1, wherein the target support pillars are determined based on spot detection of the support pillars; and
the spot detection of the support pillars comprises:
transmitting light through each optical fiber in each first support pillar, and projecting light output from each optical fiber onto a spot detection apparatus, to form a first spot projection;
detecting positional accuracy of each first spot projection by using the spot detection apparatus, and determining whether a position of each first spot projection coincides with a standard position;
when the position of the first spot projection does not coincide with the standard position, adjusting a position of the first support pillar corresponding to the first spot projection, so that the position of the first spot projection coincides with the standard position; and
determining that first support pillars corresponding to coincident first spot projections are the target support pillars.

3. The manufacturing method according to claim 2, wherein an adjustment assembly is disposed on the holding apparatus, and the adjustment assembly is configured to adjust a relative position between at least one of the plurality of first support pillars and another first support pillar; and
adjusting the position of the first support pillar corresponding to the first spot projection comprises:
adjusting, by using the adjustment assembly, the position of the first support pillar corresponding to the non-coincident first spot projection.

4. The manufacturing method according to claim 2, wherein combining the plurality of first support pillars based on the preset arrangement pattern comprises: causing the first support pillars to extend in a same direction, and aligning end faces of the first support pillars at least on a first side, wherein
the preset arrangement pattern comprises a honeycomb shape and a chessboard shape; and when the preset arrangement pattern is the honeycomb shape, lines connecting centers of any four adjacent first support pillars form a parallelogram; or when the preset arrangement pattern is the chessboard shape, lines connecting centers of any four adjacent first support pillars form a rectangle.

5. The manufacturing method according to claim 4, wherein
when the preset arrangement pattern is the honeycomb shape, a quantity of the first support pillars is seven, wherein one of the first support pillars is located at a center of the preset arrangement pattern, and remaining six first support pillars are sequentially arranged around the first support pillar located at the center; or
when the preset arrangement pattern is the chessboard shape, a quantity of the first support pillars is four or nine, and a quantity of rows of the first support pillars is equal to a quantity of columns of the first support pillars.

6. The manufacturing method according to claim 1, further comprising:
removing the holding apparatus from the plurality of first support pillars in which the target support pillars have been bonded, to obtain a stacked unit comprising the plurality of first support pillars.

7. The manufacturing method according to claim 6, further comprising:
obtaining a plurality of stacked units;
shaping and securing the plurality of stacked units by using a securing frame; and
adding a bonding agent to gaps between a plurality of target stacked units, so that the plurality of target stacked units are bonded to each other.

8. The manufacturing method according to claim 7, wherein the securing frame comprises a recessed frame and a pressing strip, and shaping and securing the plurality of stacked units by using the securing frame comprises:
arranging the stacked units based on an arrangement pattern of first support pillars in the stacked units, and inserting the stacked units into the recessed frame;
determining that no gap sufficient for inserting a second support pillar exists between the stacked units inserted into the recessed frame, wherein the second support pillar has a same structure and size as the first support pillar; and
disposing the pressing strip at an opening of the recessed frame, to secure the stacked units and maintain relative displacements between the stacked units.

9. The manufacturing method according to claim 8, wherein when the preset arrangement pattern is a honeycomb shape, determining that no gap sufficient for inserting the second support pillar exists between the stacked units inserted into the recessed frame comprises:
determining that a gap sufficient for inserting the second support pillar exists between the stacked units; and
inserting a second support pillar having an optical fiber disposed inside into the gap between the stacked units.

10. The manufacturing method according to claim 8, wherein when the preset arrangement pattern is a chessboard shape, determining that no gap sufficient for inserting the second support pillar exists between the stacked units inserted into the recessed frame comprises:
determining a shape of a rectangle formed by combining the stacked units.

11. The manufacturing method according to claim 9, wherein when the second support pillar is inserted into a gap between at least two of the stacked units, positional accuracy of the second support pillar inserted into the gap and each stacked unit adjacent to the second support pillar is calibrated.

12. The manufacturing method according to claim 11, wherein the first support pillar and the second support pillar each comprise a first pillar body and a second pillar body that are sequentially disposed along an extension direction thereof, the second pillar body is disposed at a rear end of the first pillar body, a cross-sectional area of the second pillar body is less than a cross-sectional area of the first pillar body, and a step surface is provided between the second pillar body and the first pillar body; and
calibrating positional accuracy of each stacked unit and each second support pillar comprises:
obtaining a position calibration apparatus, wherein the position calibration apparatus is provided with a plurality of first openings, a shape of the first opening is the same as a cross-sectional shape of the second pillar body, and a position arrangement of the first openings is in accordance with the preset arrangement pattern;
selecting a plurality of second pillar bodies as first calibration objects, wherein the first calibration objects are respectively from different stacked units, or are respectively from the stacked units and the second support pillar, and inserting each first calibration object into each first opening; and
if the first calibration object fails to be inserted into the first opening, adjusting a position of the stacked unit or the second support pillar corresponding to the first calibration object, so that the second pillar body is capable of being inserted into the first opening corresponding to the second pillar body.

13. The manufacturing method according to claim 11, wherein at any point along an extension direction of the first support pillar and the second support pillar, the first support pillar and the second support pillar have a same cross-sectional shape and an equal area, and calibrating positional accuracy of each stacked unit and each second support pillar comprises:
obtaining a film, wherein the film is made of a transparent material, the film is marked with position marks of a plurality of central holes, and a position arrangement of the position marks is in accordance with the preset arrangement pattern;
selecting the plurality of central holes as second calibration objects, wherein the second calibration objects are respectively from different stacked units, or are respectively from the stacked units and the second support pillar;
covering a front end face of each second calibration object with the film, and aligning each second calibration object with each position mark one by one; and
if the second calibration object is not aligned with the position mark, adjusting a position of the stacked unit or the second support pillar corresponding to the second calibration object, so that the second calibration object is capable of being aligned with the position mark corresponding to the second calibration object.

14. The manufacturing method according to claim 8, wherein the target stacked units are determined based on spot detection of the stacked units; and
the spot detection of the stacked units comprises:
selecting a plurality of optical fibers as detection objects, wherein the detection objects are respectively from different stacked units, or are respectively from the stacked units and the second support pillar;
transmitting light through each detection object, and projecting light output from each detection object onto a spot detection apparatus, to form a second spot projection;
detecting positional accuracy of each second spot projection by using the spot detection apparatus, and determining whether a position of each second spot projection coincides with a standard position;
when the position of the second spot projection does not coincide with the standard position, adjusting a position of the first support pillar or the second support pillar corresponding to the second spot projection, so that the position of the second spot projection coincides with the standard position; and
determining that stacked units corresponding to coincident second spot projections are the target stacked units.

15. An optical fiber assembly, wherein the optical fiber assembly comprises a plurality of first support pillars used for supporting optical fibers, a central hole that penetrates through two ends of each first support pillar is provided at a center of the first support pillar, and one optical fiber is disposed in each central hole.

16. The optical fiber assembly according to claim 15, wherein a cross-sectional shape of the first support pillar is any one of a circle, a regular triangle, a rectangle, a regular pentagon, and a hexagon.

17. An optical fiber assembly, wherein the optical fiber assembly comprises a plurality of stacked units, each stacked unit comprises a plurality of first support pillars used for supporting optical fibers, a central hole that penetrates through two ends of each first support pillar is provided at a center of the first support pillar, and one optical fiber is disposed in each central hole.

18. The optical fiber assembly according to claim 17, wherein the stacked units are arranged in a honeycomb shape, a second support pillar is disposed in a gap between the stacked units, the second support pillar has a same structure and size as the first support pillar, one optical fiber is inserted into a central hole of each second support pillar, and the first support pillars and second support pillars are arranged in a honeycomb shape as a whole.

19. The optical fiber assembly according to claim 17, wherein both the stacked units and the first support pillars located in a same stacked unit are arranged in a rectangular array.

20. The optical fiber assembly according to claim 17, wherein a cross-sectional shape of the first support pillar is any one of a circle, a regular triangle, a rectangle, a regular pentagon, and a hexagon.

21. The optical fiber assembly according to claim 17, further comprising a securing frame, wherein the securing frame is configured to secure each stacked unit, and the securing frame comprises:
a recessed frame, wherein the recessed frame is configured to accommodate each stacked unit, so that each stacked unit is capable of being inserted into the recessed frame along a direction perpendicular to the recessed frame, and a second opening is provided on one side of the recessed frame; and
a pressing strip, disposed on the second opening, wherein the pressing strip is detachably connected to the recessed frame, and the pressing strip is capable of closing the second opening, so that the stacked unit inserted into the securing frame is restricted from moving out of the securing frame.

22. The optical fiber assembly according to claim 21, wherein positioning holes are provided on a coupling element coupled to the optical fiber assembly, guiding holes are provided on the recessed frame, a quantity of the guiding holes is the same as a quantity of the positioning holes, and when the optical fiber assembly is coupled to the coupling element, positions of the guiding holes are in a one-to-one correspondence with the positioning holes.

23. An optical communication device, comprising the optical fiber assembly according to any one of claims 15 to 22.
